Europäisches Patentamt

European Patent Office

Office européen des brevets

(19)

(11) Veröffentlichungsnummer: **0 004 669**
**B1**

(12) **EUROPÄISCHE PATENTSCHRIFT**

(21) Anmeldenummer: **79101043.2**

(22) Anmeldetag: **05.04.79**

(51) Int. Cl.³: **A 01 K 11/00 B 25 B 7/00**

(54) Tätowierzange zum Kennzeichnen der Ohren von Tieren

(30) Priorität: **07.04.78 DE 2814987**

(43) Veröffentlichungstag der Anmeldung:
**17.10.79 Patentblatt 79/21**

(45) Bekanntmachung des Hinweises auf die Patenterteilung:
**29.10.80 Patentblatt 80/22**

(84) Benannte Vertragsstaaten:
**BE FR GB NL SE**

(56) Entgegenhaltungen:
**DE - C - 86 515**
**GB - A - 1 444 355**

(73) Patentinhaber: **Noll, Erwin**
**Klein-Weinbach 1**
**D - 6294, Weinbach 4 (DE)**
**Knörr, Herr Karlheinz**
**Fichtenhof**
**D - 6294 Weinbach 4 (DE)**

(72) Erfinder: **Noll, Erwin**

(74) Vertreter: **Beyer, Werner, Dipl-Ing. et al**
**Staufenstrasse 36, II P.O. Box 174109**
**D - 6000 Frankfurt Main (DE)**

Courier Press, Leamington Spa, England.

Tätowierzange zum Kennzeichnen der Ohren von Tieren.

Die Erfindung betrifft eine Tätowierzange zum Kennzeichnen der Ohren von Tieren, bestehend aus einer gegen Federkraft in Richtung auf eine Gegenbacke beweglichen Nadelbacke mit einer Anzahl in die Maulöffnung zwischen den Backen vorstehender Hohlnadeln, die mit ihren inneren Enden an eine an der Nadelbacke angeordnete und beim Betätigen der Zange in ihrem Volumen veränderbare Zwischenkammer angeschlossen sind, welche über wenigstens ein Rückschlagventil mit einer Vorratskammer für die Tätowierflüssigkeit verbunden ist.

Eine solche Tätowierzange ist seit langem aus der DE—PS 86 515 bekannt. Bei ihr werden die als Kapillarröhren ausgebildeten Hohlnadeln durch Verkleinerung des Volumens der Zwischenkammer beim Rückhub der Zange gefüllt, während beim eigentlichen Tätowierhub ein erneutes Ansaugen von Tätowierflüssigkeit aus der Vorratskammer in die Zwischenkammer über ein oder mehrere Rückschlagventile erfolgt. Dabei besteht die Gefahr, daß die kapillarkanäle beim Einstechen der Nadeln in das Fleisch des Tieres verstopfen und dadurch die darin enthaltene Tätowierflüssigkeit daran gehindert wird, aus den Kapillarkanälen in das Fleisch auszutreten und den gewünschten Kennzeichnungspunkt zu setzen.

Es nimmt deshalb nicht Wunder, daß sich die vorbekannte Tätowierzange offensichtlich in der Praxis nicht durchgesetzt hat und stattdessen bis heute die Tätowierung durch Einstechen voller Nadeln und anschließendes gesondertes Auftragen und Einreiben der Tätowierflüssigkeit vorgenommen wird. Dieses Verfahren ist jedoch deshalb sehr aufwendig, weil außer der tätowierenden Person stets eine weitere Person sum Festhalten des Tieres nach dem Einstechen Benötigt wird.

Aufgabe der Erfindung ist es deshalb, eine Tätowierzange der eingangs genannten Art zu schaffen, bei welcher das Einleiten der Tätowierflüssigkeit in das Fleisch des Tieres ohne die Gefahr einer Verstopfung der Kapillarkanäle erfolgt und sich dadurch eine zweite Person zum Festhalten des durch den Einstechschmerz unruhig gewordenen Tieres erübrigt.

Erfindungsgemäß wird diese Aufgabe gelöst durch eine kraftschlüssige Verbindung zwischen der Nadelbacke und dem Betätigungsmechanismus der Zange, bei deren Nachgeben am Ende des Eindringsvorganges der Nadeln deren freie Länge kürter ist als die Dicke der zu tätowierenden Ohren das Volumen der Zwischenkammer unter Auspressung der darin enthaltenen Tätowierflüssigkeit in das Ohr des Tieres zwangsläufig vermindert wird.

Die Erfindung nutzt somit die Betätigungsbewegung der Zange in Schließrichtung zunächst zum Einstechen und anschließenden Einspritzen der Tätowierflüssigkeit unter Druck, welches beginnt, sowie sich die Oberfläche der Nadelbacke auf der Haut des Tieres abstützt, Dadurch werden etwaige haut-oder Fleischteile, die beim Einstechen in die Kapillaröffnungen der Nadeln eingedrungen sind, unter dem Druck der Tätowierflüssigkeit wieder entfernt, und es wird sichergestellt, daß durch sämtliche Nadeln eine einwandfreie Einspritzung zur Gewährleistung einer einwandfrei lesbaren Markierung erfolgt.

Un die gute Sichtbarkeit der markierten Punkte auf der Hautoberfläche weiterhin zu gewährleisten, ist nach einem Merkmal zur vorteilhaften Ausgestaltung der Erfindung die freie Länge der Nadeln erheblich kürzer als die Dicke der zu tätowierenden Ohren. Außerdem ist es zweckmäßig, die Offnungsweite der Maulöffnung einstellbar zu gestalten, um letztlich über den begrenzten Hub hinweg auch die Menge der mit dem Nachgeben der kraftschlüssigen Verbindung eingespritzten Tätowierflüssigkeit zu beschränken.

Eine besonders vorteilhafte konstruktive Ausbildung der Erfindung wird dadurch erhalten, daß die Zwischenkammer von einem Pumpenzylinder mit darin verschieblichen Kolben gebildet ist, welcher die Nadelbacke trägt, während der Zylinder vom Betätigungsmechanismus der Zange formschlüssig erfaßbar ist. Um nach erfolgtem Hub das erneute Füllen der Zwischenkammer zu gewährleisten, ist hierbei zweckmäig innerhalb des Zylinders eine Rückstellfeder angeordnet. Weiterhin ist es von Vorteil, daß der die Vorratskammer begrenzende Zwischenboden als eine das Rückschlagventil bzw. die Rückschlagventile enthaltende Ventilplatte ausgebildet ist.

Mit der erfindungsgemäßen Tätowierzange läßt sich ohne Unterbrechung eine beliebig große Anzahl von Tieren tätowieren, was bei Betätigung der Zange von Hand möglicherweise zu einer vorzeitigen Ermüdung der die Tätowierung vornehmenden Person führen wird, die insbesondere durch den Kraftaufwand bedingt ist, den das Ausdrücken der Tätowierflüssigkeit durch die Kapillarnadeln erfordert. Nach einem besonderen Merkmal zur vorteilhaften Ausgestaltung der Erfindung ist deshalb der Betätigungsmechanismus der Zange zweckmäßig ein Druckluftantrieb, der an ein in den meisten landwirtschaftlichen Betrieben ohnehin vorhandenes Druckluftsystem angeschlossen werden kann. Um angeachtet dieses Antriebs den Vorratsbehälter im Bedarfsfall leicht nachfüllen zu können und ferner eine unnötige Behinderung beim Auswechseln der Nadeln zur etwaigen Umstellung des zu tätowierenden Kennzeichens zu vermeiden, ist es ferner vorteilhaft, wenn in noch weiterer Ausgestaltung der Erfindung die Nadelbacke, der Pumpenzylinder und der Vorratsbehälter eine vom Druckluftantrieb lösbare Einheit bilden.

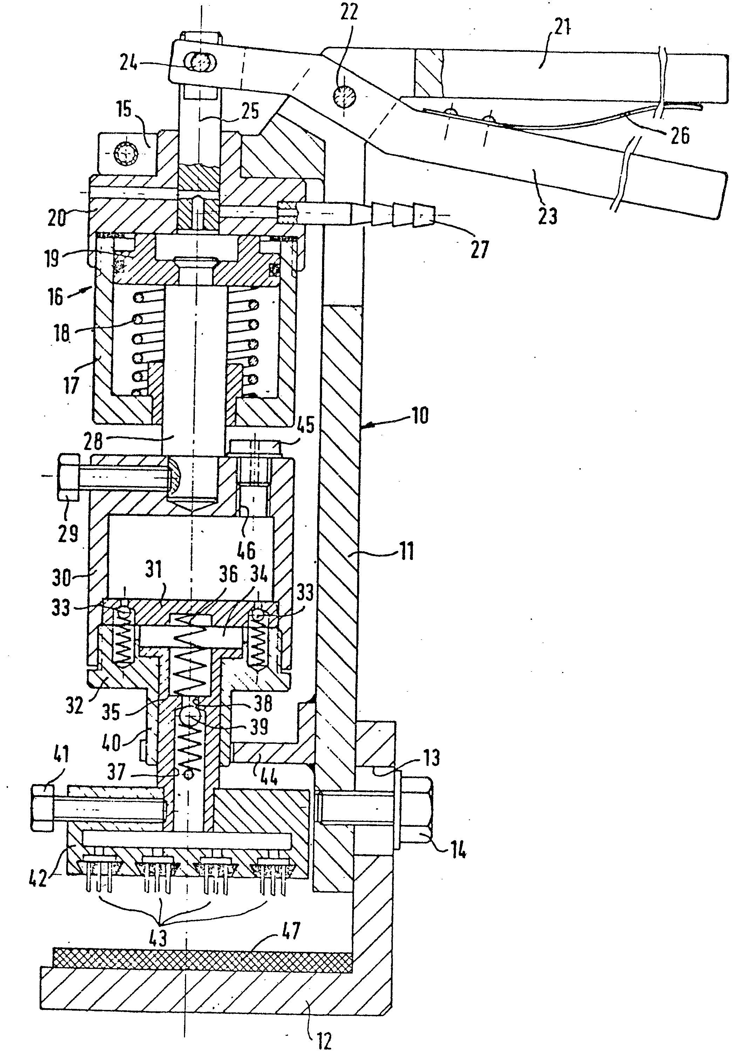

Ein bevorzugtes Ausführungsbeispiel der erfindungsgemäßen Tätowierzange wird nachstehend in Verbindung mit der Zeichnung näher erläutert, die eine Schnittdarstellung einer solchen Zange zeigt.

Die dargestellte Zange weist einen dreiarmigen Träger 10 auf, an dessen einem Arm 11 eine abgewinkelt Gegenbacke 12 mittels Langlock 13 und Klemmschraube 14 längsverstellbar befestigt ist. Ein parallel zur Gegenbacke 12 gerichteter zweiter Arm 15 des Trägers 10 ist als Klemmfutter für einen Druckluftantrieb 16 ausgebildet, der aus einem Druckluftzylinder 17 mit darin gegen die Wirkung einer Rückstellfeder 18 verschieblichem Kolben 19 und einem Ventilkopf 20 besteht. Der dritte Arm 21 des Trägers 10 ist als Zangengriff ausgebildet, der mit einem zweiten, daran um einen Bolzen 22 verschwenkbaren Zangengriff 23 die Handhabe und zugleich Auslöseeinrichtung für die Zange bildet. Zu diesem Zweck ist der zweite Zangengriff 23 über den Bolzen 22 hinaus verlängert und greift über einen Bolzen 24 gelenkig an einem Ventilschieber 25 an, der mit darin angeordneten Bohrungen in der gezeigten oberen Stellung den Raum oberhalb des Kolbens 19 im Zylinder 17 sur Atmosphäre entlüftet und beim Zusammendrücken der Zangengriffe 21, 23 gegen die Wirkung einer Blattfeder 26 den Raum oberhalb des Kolbens 19 mit einem Druckluftanschluß 27 verbindet, über den mittels eines daran anzuschließenden Schlauches Druckluft von einer beliebigen Druckluftquelle zugeführt werden kann, durch welche der Kolben 19 mit seiner aus dem Zylinder 17 herausrangenden Kolbenstange 28 nach abwärts bewegbar ist.

An dem herausragenden Ende der Kolbenstange 28 ist mittels einer Klemmschraube 29 lösbar ein topfförmiger Vorratsbehälter 30 für die Tätowierflüssigkeit befestigt, in welchen von unten ein Zylinderboden der als Ventilplatte 31 ausgebildet ist und ein diese dichtend haltender Pumpenzylinder 32 eingesetzt sind.

Die Ventilplatte 31 enthält nahe ihrem Außenrand diametral zueinander versetzt zwei mit Rückschlagventilen 33 versehene Durchtrittsöffnungen zu einer Zwischenkammer 34, die von dem erweiterten Ende einer Axialbohrung durch den Pumpenzylinder 32 gebildet ist. In dieser Axialbohrung ist ein am oberen Ende, flanschartig verdickter Pumpenkolben 35 gegen die Wirkung einer Rückstellfeder 36 bis zum Anschlag gegen die Ventilplatte 31 verschieblich. Der Pumpenkolben 35 enthält eine durchgehende Axialbohrung 37 mit einer Verengung 38, die von einem Rückschlagventil 39 verschließbar ist.

An dem durch einen kragenförmigen Ansatz 40 am Pumpenzylinder 32 herausragenden unteren Ende des Pumpenkolbens 35 ist mittels einer Klemmschraube 41 lösbar eine hohl ausgebildete Nadelbacke 42 befestigt, in deren Boden eine beliebige Anzahl Hohlnadeln 43 in einer dem zu tätowierenden Zeichen entsprechenden Anordnung eingesetzt sind. Die freien Enden der Hohlnadeln sind ähnlich wie bei Injektionsspritzen durch Abschrägung zugespitzt, und die freie Länge der Nadeln ist erheblich kürzer als die Dicke der zur tätowierenden Ohren.

Der kragenförmige Ansatz 40 des Pumpenzylinders 32 ist am ersten Arm 11 des Trägers 10 in einem Gabelstück 44 geführt, das eine Herausnahme der vom Vorratsbehälter 30, dem Pumpenzylinder 32 und der Nadelbacke 42 gebildeten Einheit nach Lösen der Klemmschraube 29 ermöglicht, um durch eine von einer Entlüftungsschraube 45 verschließbare Füllöffnung 46 den Vorratsbehälter mit Tätowierflüssigkeit füllen bzw. nachfüllen zu können.

Die Gegenbacke 12 kann mit einem nachgiebigen Belag 47 aus Kunststoff o.dgl. beschichtet sein.

Für den Gebrauch der vorbeschriebenen Zange wird zunächst die Naulöffnung zwischen der Nadelbacke 42 und der Gegenbacke 12 durch Lösen und Wiederanziehen der Klemmschraube 14 auf eine solche Größe eingestellt, daß die Ohren der zu tätowierenden Tiere von den Hohlnadeln 43 unbehindert in die Maulöffnung eingeführt werden können, und der Druckluftanschluß 27 wird über den erwähnten Druckluftschlauch an die zur Verfügung stehende Druckluftquelle angeschlossen. Damit ist die Zange betriebsbereit.

Nun wird die Zange an den Griffen 21, 23 erfaßt und mit ihrer Maulöffnung an dem Ohr des zu tätowierenden Tieres angesetzt. Durch Zusammendrücken der Zangengriffe 21, 23 wird der Weg für die Druckluft vom Anschluß 27 zur Oberseite des Kolbens 19 im Druckluftzylinder 16 freigegeben, und dieser bewegt sich zusammen mit seiner Kolbenstange 28 gegen die Wirkung der Rückstellfeder 18 nach unten. Die Kolbenstange 28 nimmt hierbei den Vorratsbehälter 30 mit dem Pumpenzylinder 32 und über die von der Rückstellfeder 36 gebildete kraftschlüssige Verbindung auch den Pumpenkolben 35 mit der Nadelbacke 42 mit und bewirkt, daß die Hohlnadeln 43 in die Haut und gegebenenfalls noch etwas das Fleisch des Tieres einstechen, bis die Nadelbacke 42 selbst gegen die Haut des Tieres zur Anlage kommt. Die Rückstellfeder 36 ist so bemessen, daß sie von diesem Zeitpunkt an einfedert, wodurch sich der Pumpenkolben 35 relativ zum Pumpenzylinder nach aufwärts gegen die Ventilplatte 31 bewegt und die in der Zwischenkammer 34 enthaltene Tätowierflüssigkeit unter Öffnung des Rückschlagventils 39 in den Hohlraum der Nadelbacke 42 und weiter durch die Hohlnadeln 43 in die Haut bzw. das Fleisch des Tieres einspritzt. Dabei werden gleichzeitig etwaige Verstopfungen der Hohlnadeln, die beim Einstechen entstanden sind, beseitigt.

Der vorbeschriebene Einspritzvorgang dauert an, bis der Pumpenkolben 35 gegen die Ventilplatte 31 zur Anlage gelangt ist oder der Kolben 19 im Druckluftzylinder 17 seinen Abwärtshub beendet hat. Durch entsprechende Einstellung der Gegenbacke 12 mittels der Klemmschraube 14 kann erreicht werden, daß der Kolben 19 seinen Abwärtshub beendet, bevor der Pumpenkolben 35 gegen die Ventilplatte 31 zur Anlage kommt, so daß das Ohr des Tieres nicht mit der vollen Kraft des Druckluftantriebs beaufschlagt wird.

Sowie das Einstechen der Hohlnadeln 43 und das Einspritzen der Tätowierflüssigkeit beendet ist, wird der Zangengriff 23 losgelassen und bewegt unter der Wirkung der Blattfeder 26 den Ventilschieber 25 nach oben, wodurch der Druckluftzylinder 17 intlüftet wird und der Kolben 19 unter der Wirkung der Rückstellfeder 18 in die obere Endlage zurückkehrt. Über die Kolbenstange 28 wird der Vorratsbehälter 30 mit dem Pumpenzylinder 32 mitgenommen, wobei sich zunächst die Rückstellfeder 36 ausdehnt und dann auch der Pumpenkolben 35 mit der Nadelbacke 42 und den Hohlnadeln 43 aus dem Ohr des Tieres herausgezogen werden. Mit der Ausdehnung der Rückstellfeder 36 vergrößert sich das Volumen der Zwischenkammer 34, und diese saugt über die Durchtrittsöffnungen in der Ventilplatte 31, deren Rückschlagventile 33 hierbei öffnen, neue Tätowierflüssigkeit aus dem Vorratsbehälter 30 an. Damit ist die Zange für die nächste Täowierung einsatzbereit. Zur Änderung des zu tätowierenden Zeichens genügt es, die Nadelbacke 42 durch Lösen der Klemmschraube 41 abzunehmen und auszutauschen bzw. mit einem anderen Nadelsatz zu bestücken.

## Patentansprüche

1. Tätowierzange zum Kennzeichnen der Ohren von Tieren, bestehend aus einer gegen Federkraft in Richtung auf eine Gegenbacke (12) beweglichen Nadelbacke (42) mit einer Anzahl in die Maulöffnung zwischen den Backen vorstehender Hohlnadeln (43) die mit ihren inneren Enden an eine an der Nadelbacke (42) angeordnete und beim Betätigen der Zange in ihrem Volumen veränderbare Zwischenkammer (34) angeschlossen sind, welche über wenigstens ein Rückschlagventil (39) mit einem Vorratsbehälter (30) für die Tätowierflüssigkeit verbunden ist, gekennzeichnet durch eine kraftschlüssige Verbindung (Rückstellfeder 36) zwischen der Nadelbacke (42) und dem Betätigungsmechanismus (16) der Zange, bei deren Nachgeben am Ende des Eindringvorgangs der Hohl nadeln (43), deren freie Länge kürzer ist als die Dicke der zu tätowierenden Ohren, das Volumen der Zwischenkammer (34) unter Auspressung der darin enthaltenen Tätowierflüssigkeit in das Ohr des Tieres zwanglsäufig vermindert wird.

2. Tätowierzange nach Anspruch 1, dadurch gekennzeichnet, daß die freie Länge der Hohl nadeln (43) erheblich kürzer als die Dicke der zu tätowierenden Ohren ist und zwar derart daß die gute sichtbarkeit der markierten Punkte auf der Hautoberfläche gewahrleistet ist.

3. Tätowierzange nach Anspruch 1 oder 2, dadurch gekennzeichnet, daß die Öffnungsweite der Maulöffnung durch verstellen der Gegenbacke (12) mittels hangloch (13) und Klemmschraube (14) einstellbar ist.

4. Tätowierzange nach einem der vorhergehenden Ansprüche, dadurch gekennzeichnet, daß die Zwischenkammer (34) von einem Zylinderboden (31) und einem Pumpenzylinder (32) mit darin verschieblichem Kolben (35) gebildet ist, welcher die Nadelbacke (42) trägt, während der Zylinder (32) mit dem Betätigungsmechanismus (16) der Zange formschlüssig verbindbar ist.

5. Tätowierzange nach Anspruch 4, dadurch gekennzeichnet, daß innerhalb des Zylinders (32) eine Rückstellfeder (36) als Kraftschlüssige Verbindung angeordnet ist.

6. Tätowierzange nach Anspruch 4 oder 5, dadurch gekennzeichnet, daß der Zylinderboden den Vorratsbehälter (30) begrenzt und als eine das Rückschlagventil bzw. die Rückschlagventile (33) enthaltende Ventilplatte (31) ausgebildet ist.

7. Tätowierzange nach einem der vorhergehenden Ansprüche, dadurch gekennzeichnet, daß der Betätigungsmechanismus ein Druckluftantrieb (16) ist.

8. Tätowierzange nach Anspruch 7, dadurch gekennzeichnet, daß die Nadelbacken (42), der Pumpenzylinder (32) und der Vorratsbehälter (30) eine vom Druckluftantrieb (16) lösbare Einheit bilden.

## Revendications

1. Pince de tatouage pour le marquage des oreilles d'animaux, comprenant une mâchoire à aiguilles 42, mobile contre la force d'un ressort en direction d'une mâchoire fixe 12, la mâchoire à aiguille étant muni d'un certain nombre d'aiguille creuses qui font saillie dans l'intervalle qui sépare ces mâchoires et sont reliées à une chambre intermédiaire 34 dont le volume est modifiable lorsqu'on actionne la pince, cette chambre intermédiaire étant reliée par l'entremise d'au moins un clapet de retenue à un réservoir d'alimentation 30 pour le liquide de tatouage, caractérisée en ce qu'elle comporte une liaison dynamique 36 entre la mâchoire 42 à aiguille 43 et le mécanisme d'actionnement 16 de la pince, cette liaison, en cédant à la fin de l'enfoncement des aiguilles 43 dont la longueur libre est inférieure à l'épaisseur de l'oreille à tatouer, ayant pour conséquence de réduire positivement le volume de la chambre intermédiaire 34 en compriment le liquide de tatouage qu'elle contient pour en injecter dans l'oreille de l'animal.

2. Pince de tatouage selon la revendication 1, caractérisée en ce que la longueur libre des aiguilles creuses 43 est sensiblement inférieure à l'épaisseur de l'oreille à tatouer, de manière à assurer une bonne visibilité des points de marquage sur la surface de la peau.

3. Pince de tatouage selon l'une ou l'autre des revendications 1 ou 2 caractérisée en ce que la largeur d'ouverture des mâchoires est réglable par déplacement de la mâchoire fixe 12 grâce à une mortaise 13 et à une vis d'arrêt 14.

4. Pince de tatouage selon l'une quelconque des revendications 1 à 3 caractérisée en ce que la chambre intermédiaire 34 est formée par un fond de cylindre 31 et un cylindre de pompe 32 dans lequel peut coulisser un piston de pompe 35, lequel porte la mâchoire 42 à aiguilles 43, tandis que le cylindre de pompe 32 peut être positivement accouplé au mécanisme de commande 16.

5. Pince de tatouage selon la revendication 4, caractérisée en ce qu'un ressort de rappel 36 est disposé à l'intérieur du cylindre 32 pour constituer une liaison dynamique.

6. Pince à tatouer selon l'une ou l'autre des revendications 4 ou 5 caractérisée en ce que le fond de cylindre du réservoir d'alimentation 30 est délimité et constitué par un disque à clapets 32 dans lequel sont incorporés un ou plusieurs clapets anti-retour 33.

7. Pince à tatouer selon l'une quelconque des revendications 1 à 6, caractérisée en ce que le mécanisme de commande est constitué par une valve pneumatique 16.

8. Pince à tatouer selon la revendications 7, caractérisée en ce que la mâchoire à aiguille 42, le cylindre de pompe 32 et le réservoir d'alimentation 30 forment ensemble un bloc que l'on peut séparer de la valve pneumatique de commande 16.

**Claims**

1. Tattooing pincers for marking the ears of animals, comprising a needle jaw movable against spring tension towards a counterjaw and having a plurality of hollow needles which project into the jaw gap between the jaws and which at their inner ends are connected to an intermediate chamber disposed on the needle jaw and variable in its volume upon actuation of the pincers, which intermediate chamber is connected *via* at least one non-return valve with a storage container for the tattooing liquid, characterised by a force-locked connection (return spring 36) between the needle jaw (42) and the actuating mechanism (16) of the pincers, and, when it yields at the end of the penetration process of the needles (43) the free length of which is less than the thickness of the ears to be tattooed, the volume of the intermediate chamber (34) is necessarily reduced, whereupon the tatooing liquid contained therein is forced out into the ear of the animal.

2. Tattooing pincers according to Claim 1, characterised in that the free length of the hollow needles (43) is considerably less than the thickness of the ears to be tattooed, namely in such a way as to ensure that the points marked on the skin surface are clearly visible.

3. Tattooing pincers according to Claim 1 or Claim 2, characterised in that the open width of the jaw gap can be varied by adjusting the counterjaw (12) by means of an elongate hole (13) and clamping screw (14).

4. Tattooing pincers according to one of the preceding Claims, characterised in that the intermediate chamber (34) is formed by a cylinder base (31) and a pump cylinder (32) with a piston (35) displaceable therein, which piston carries the needle jaw (42), whereas the cylinder (32) can be positively connected with the actuating mechanism (16) of the pincers.

5. Tattooing pincers according to Claim 4, characterised in that a return spring (36) is arranged inside the cylinder (32) as a force-resisting connection.

6. Tattooing pincers according to Claim 4 or Claim 5, characterised in that the cylinder base defines the storage container (30) and is designed as a valve plate (31) containing the non-return valve or non-return valves (33).

7. Tattooing pincers according to one of the preceding Claims, characterised in that the actuating mechanism is a pneumatic drive (16).

8. Tattooing pincers according to Claim 7, characterised in that the needle jaws (42), the pump cylinder (32) and the storage container (30) form a unit detachable from the pneumatic drive (16).

0 004 669